# DEMANDE DE BREVET EUROPEEN

(11) **EP 3 627 006 A1**
(43) Date de publication de la demande: **25.03.2020**
(21) Numéro de dépôt: 18196288.7
(22) Date de dépôt: 24.09.2018
(51) Int. Cl.: F16H 63/34

(54) **SYSTEME DE BLOCAGE EN STATIONNEMENT POUR UNE TRANSMISSION D'UNE BOITE DE VITESSES AUTOMATIQUE, HYBRIDE, OU ELECTRIQUE D'UN VEHICULE AUTOMOBILE, EQUIPE D'UN DISPOSITIF DE SECURITE**

(71) Demandeur: DURA Automotive Holdings U.K., Ltd., Birmingham, B35 7AG (GB)
(72) Inventeur: MAITRE, Sébastien, 43120 MONISTROLE SUR LOIRE (FR); PRADIER, Philippe, 42290 SORBIERS (FR)
(74) Mandataire: Cabinet Laurent & Charras

(57) **Abrégé**

L'invention concerne un système (1) de blocage en stationnement pour une transmission d'une boîte de vitesses automatique, hybride, ou électrique d'un véhicule automobile, le système (1) comprenant un loquet (3) pourvu d'un doigt (3a) de blocage destiné à adopter une position d'engagement, poussé par un actionneur, dans laquelle le doigt (3a) est engagé dans un creux (4a) d'une roue (4) de blocage liée en rotation à une sortie de la transmission pour bloquer la sortie de la transmission, ou une position désengagement du doigt (3a), rappelé par un organe élastique de rappel (7), ***caractérisé*** en ce qu'il comprend un dispositif de sécurité (2) centrifuge solidaire en rotation avec la roue (4) de blocage, et déplaçable, par l'effet de la force centrifuge résultant d'une rotation de la roue (4) de blocage à une vitesse supérieure à une vitesse seuil, depuis une position neutre dans laquelle le dispositif de sécurité (2) centrifuge n'interfère pas avec le doigt (3a), jusqu'à une position de sécurité, à l'encontre d'un organe élastique de rappel (7), dans laquelle le dispositif de sécurité (2) centrifuge empêche l'engagement du doigt (3a) dans le creux (4a) de la roue (4).

## Description

### DOMAINE TECHNIQUE

L'invention se rattache au secteur technique des boîtes de vitesses automatiques, hybrides, ou électriques pour véhicules automobiles.

Plus particulièrement, l'invention concerne un système de blocage en stationnement pour une transmission d'une boîte de vitesses automatique, hybride, ou électrique d'un véhicule automobile, ledit système de blocage étant équipé d'un dispositif de sécurité.

### ART ANTERIEUR

Dans l'état actuel de la technique, il est connu un système de blocage en stationnement pour une transmission d'une boîte de vitesses automatique, hybride, ou électrique d'un véhicule automobile.

Le système de blocage comprend un loquet pourvu d'un doigt de blocage et destiné à adopter une position d'engagement, poussé par un actionneur, dans laquelle le doigt est engagé dans un creux d'une roue de blocage liée en rotation à une sortie de la transmission pour bloquer la sortie de la transmission.

Alternativement, le doigt de blocage est destiné à adopter une position désengagement, rappelé par un organe élastique de rappel.

Cependant, dans le cas où le système de blocage est actionné alors que le véhicule roule, c'est-à-dire lorsque la roue de blocage est aussi en rotation, le loquet, poussé par l'actionneur, tape et rebondit contre la roue, jusqu'au moment où le doigt du loquet arrive, après de multiples tentatives, à pénétrer dans le creux de la roue.

Ces impacts successifs du doigt du loquet contre la roue sont plus généralement connus sous le nom de phénomène de « ratcheting » (terme Anglo-Saxon), sont transmis aux différents éléments du système de blocage, et sont la cause de détériorations prématurées de la roue, et/ou du loquet, et/ou du système de blocage en tant que tel.

En principe, les systèmes de l'art antérieur sont assujettis à des moyens empêchant de les actionner lorsque le véhicule roule. Par exemple, ces moyens peuvent être informatiques et pilotés électroniquement.

Cependant, le risque de défaillance ou de panne de ces moyens d'empêchement ne peut être exclu. Par conséquent, la conception du système de blocage en stationnement est surdimensionnée pour être capable de résister aux phénomènes de « ratcheting ».

### EXPOSE DE L'INVENTION

L'un des buts de la présente invention est donc de fournir un système de blocage permettant de remédier aux inconvénients de l'art antérieur, en étant équipé d'un système de sécurité empêchant l'engagement du doigt dans un creux de la roue de blocage, et évitant ainsi les phénomènes de « ratcheting ».

Un autre objectif de l'invention est de fournir un système de blocage fiable, dont la conception n'est pas surdimensionnée.

À cet effet, il a été mis au point un système de blocage en stationnement pour une transmission d'une boîte de vitesses automatique, hybride, ou électrique d'un véhicule automobile, le système comprenant un loquet pourvu d'un doigt de blocage destiné à adopter une position d'engagement, poussé par un actionneur, dans laquelle le doigt est engagé dans un creux d'une roue de blocage liée en rotation à une sortie de la transmission pour bloquer la sortie de la transmission, ou une position désengagement du doigt, rappelé par un organe élastique de rappel.

Selon l'invention, le système comprend un dispositif de sécurité centrifuge solidaire en rotation avec la roue de blocage, et déplaçable, par l'effet de la force centrifuge résultant d'une rotation de la roue de blocage à une vitesse supérieure à une vitesse seuil, depuis une position neutre dans laquelle le dispositif de sécurité centrifuge n'interfère pas avec le doigt, jusqu'à une position de sécurité, à l'encontre d'un organe élastique de rappel, dans laquelle le dispositif de sécurité centrifuge empêche l'engagement du doigt dans le creux de la roue. Ainsi, même si le système de blocage et actionné alors que le véhicule roule à une vitesse à laquelle la vitesse de rotation de la roue dépasse une vitesse seuil, le dispositif de sécurité est déplacé dans la position de sécurité et empêche l'engagement du doigt dans un creux de la roue de blocage, évitant ainsi tout phénomène de « ratcheting ».

Ensuite, lorsque la vitesse de rotation de la roue de blocage descend en dessous de la vitesse seuil, le dispositif de sécurité centrifuge est repoussé en position neutre par l'organe élastique de rappel.

L'invention permet alors d'éviter la détérioration du système de blocage, par l'actionnement automatique et mécanique du dispositif de sécurité. Le fonctionnement est fiable, et étant donné que les phénomènes de « ratcheting » sont évités, la conception du système de blocage ne nécessite pas d'être surdimensionnée.

Selon une autre caractéristique de l'invention, le dispositif de sécurité centrifuge est monté autour d'un axe de la roue de blocage, et est déplaçable le long de cet axe, en éloignement de la roue de blocage pour adopter la position neutre, ou en rapprochement de la roue de blocage pour adopter la position de sécurité.

Le dispositif de sécurité permet d'empêcher l'engagement du doigt dans le creux de la roue. Par exemple, dans la position de sécurité, le dispositif de sécurité est positionné à cet effet entre le doigt et la roue de blocage, de sorte que lorsque le doigt tente d'adopter sa position d'engagement, il vient buter contre le dispositif.

Selon une forme de réalisation particulière, le dispositif de sécurité centrifuge comprend une couronne comprenant un flasque tronconique incliné vers l'intérieur de la couronne, et des billes positionnées autour et à proximité de l'axe de la roue de blocage en appui contre le flasque tronconique, à l'opposé de la couronne, et en contre appui contre une paroi fixe opposée au flasque.

Ainsi, lors de la rotation du dispositif de sécurité, à une vitesse supérieure à la vitesse seuil, les billes sont déplacées et écartées de l'axe sous l'effet de la force centrifuge de manière à provoquer le déplacement de la couronne, le long de l'axe, entre le doigt et la roue de blocage, c'est-à-dire en position de sécurité.

Lorsque la vitesse de rotation de la roue de blocage redescend en dessous de la vitesse seuil, les billes sont ramenées vers l'axe de la roue de blocage, et le dispositif est rappelé en position neutre par l'organe élastique de rappel.

Avantageusement, le flasque comprend des rainures radiales, régulièrement réparties autour de l'axe de la roue de blocage, lesquelles forment des pistes de guidage pour le déplacement des billes.

La paroi fixe contre lesquelles les billes sont en contre-appui peut être de tout type approprié. Selon une forme de réalisation particulière, la paroi fixe est un pignon de vitesse de la boîte de vitesses.

Selon une forme de réalisation particulière, le dispositif de sécurité centrifuge est également monté coulissant autour de deux tiges faisant saillie orthogonalement de la roue de blocage, et diamétralement opposées par rapport à l'axe de la roue de blocage, avec chaque tige comprenant un ressort de compression positionné autour d'elle, pour repousser le dispositif de sécurité en position neutre.

### BREVE DESCRIPTION DES DESSINS

D'autres caractéristiques et avantages de l'invention ressortiront clairement de la description qui en est réalisée ci-après, à titre indicatif et nullement limitatif, en référence aux figures annexées, dans lesquelles :
- la figure 1 est une vue en perspective du système de blocage en stationnement selon l'invention, équipé d'un dispositif de sécurité centrifuge, représenté en transparence ;
- la figure 2 est une vue similaire à celle de la figure 1, le système de blocage en stationnement étant représenté de côté ;
- la figure 3 est une vue en perspective illustrant le dispositif de sécurité centrifuge en perspective, et en transparence, vu du côté des billes ;
- la figure 4 est un schéma de principe illustrant le dispositif de sécurité centrifuge en position neutre ;
- la figure 5 est un schéma de principe similaire à celui de la figure 4, le dispositif de sécurité centrifuge étant représenté en position de sécurité.

### EXPOSE DETAILLE DE L'INVENTION

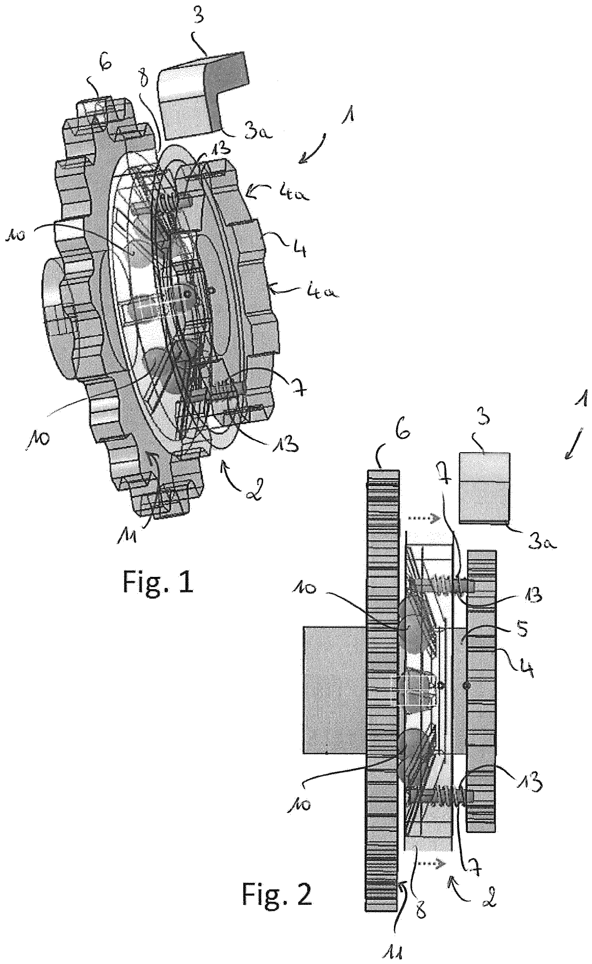

En référence aux figures 1 à 5, l'invention concerne un système (1) de blocage en stationnement pour une transmission d'une boîte de vitesses automatique, hybride, ou électrique d'un véhicule automobile, équipé d'un dispositif de sécurité (2) permettant d'empêcher mécaniquement les phénomènes connus sous le nom de « ratcheting ».

Le système (1) de blocage en stationnement comprend, d'une manière connue, un loquet (3) pourvu d'un doigt (3a) de blocage destiné à adopter une position d'engagement, poussé par un actionneur (non représenté), dans laquelle le doigt (3a) est engagé dans un creux (4a) d'une roue (4) de blocage liée en rotation à une sortie de la transmission, pour bloquer la sortie de la transmission.

Alternativement, le doigt (3a) de blocage est destiné à adopter une position de désengagement, notamment rappelée par un organe élastique de rappel, dans laquelle il ne bloque pas la sortie de la transmission.

Selon l'invention, le système (1) de blocage comprend un dispositif de sécurité (2) centrifuge permettant d'empêcher mécaniquement l'engagement du doigt (3a) dans la roue (4) de blocage pour éviter les phénomènes de « ratcheting »..

À cet effet, le dispositif de sécurité (2) centrifuge est solidaire en rotation avec la roue (4) de blocage.

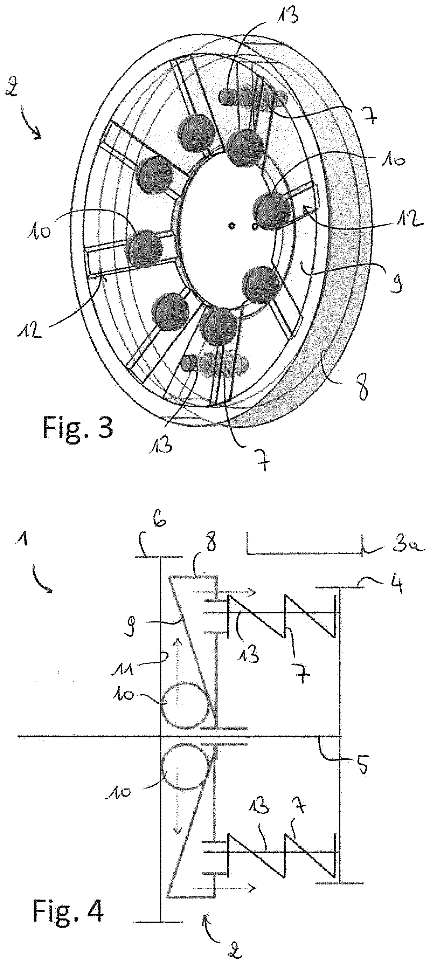

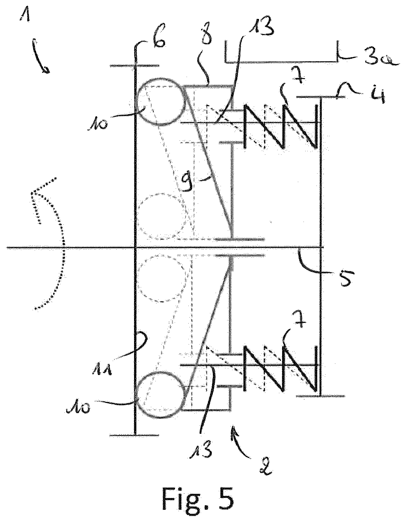

Plus précisément, le dispositif de sécurité (2) est monté coulissant autour d'un axe (5) de la roue (4) de blocage, par exemple autour d'un arbre moteur reliant la roue (4) de blocage à un pignon de vitesse (6) de la boîte de vitesses, et est déplaçable, notamment par coulissement, le long de cet axe (5), en éloignement de la roue (4) de blocage pour adopter une position neutre (figure 4), ou en rapprochement de la roue (4) de blocage pour adopter une position de sécurité (figure 5), dans laquelle il empêche l'engagement du doigt (3a) dans le creux (4a) de la roue (4) de blocage.

Le déplacement du dispositif de sécurité (2) entre la position neutre dans laquelle il n'interfère pas avec le doigt (3a), jusqu'à la position de sécurité est engendré par l'effet de la force centrifuge résultant d'une rotation de la roue (4) de blocage à une vitesse supérieure à une vitesse seuil, correspondant par exemple à une vitesse d'avancement de 3km/h du véhicule.

Le déplacement du dispositif de sécurité (2) jusqu'à la position de sécurité est effectué à l'encontre d'un organe élastique de rappel (7), qui tend à repousser le dispositif en position neutre, lorsque la vitesse de rotation de la roue (4) de blocage descend en dessous de la vitesse seuil.

Ainsi, lorsque le véhicule roule au-dessus d'une certaine vitesse, le dispositif de sécurité (2) centrifuge est automatiquement et mécaniquement déplacé dans une position de sécurité dans laquelle il empêche le doigt (3a) de blocage de s'engager dans un creux (4a) de la roue (4) de blocage, évitant ainsi tout phénomène de « ratcheting », en se positionnant entre le doigt (3a) et la roue (4) de blocage.

Selon une forme de réalisation particulière, le dispositif de sécurité (2) centrifuge comprend une couronne (8), montée autour de l'axe (5) et coaxialement avec la roue (4) de blocage. La couronne (8) comprend un flasque (9) tronconique incliné vers l'intérieur de la couronne (8).

Le dispositif de sécurité (2) comprend également des billes (10), d'une part positionnées autour et à proximité de l'axe (5) de la roue (4) de blocage en appui contre le flasque (9) tronconique, à l'opposé de la couronne (8).

D'autre part, les billes (10) sont en contre-appui contre une paroi fixe (11) opposée au flasque (9), par exemple contre le pignon de vitesse (6) de la boîte de vitesses, de sorte que lors de la rotation du dispositif de sécurité (2), à une vitesse supérieure à celle de la vitesse seuil, les billes (10) sont déplacées et repoussées vers la périphérie de la couronne (8), en étant écartées de l'axe (5) notamment sous l'effet de la force centrifuge.

Dans cette configuration, étant donné que la paroi du flasque (9) est inclinée, le déplacement des billes (10) provoque, par poussée contre la paroi inclinée, le déplacement de la couronne (8) en direction de la roue (4) de blocage pour adopter la position de sécurité.

Dans une telle position, la couronne (8), qui présente notamment un diamètre légèrement supérieur à celui de la roue (4) de blocage, se trouve positionné entre le doigt (3a) et la roue (4) de blocage, et de préférence la couronne (8) vient coiffer la roue (4) de blocage. Ainsi, lorsque le doigt (3a) tente d'adopter une position d'engagement, il vient buter contre la périphérie lisse de la couronne (8), évitant ainsi tout risque de « ratcheting », et donc tout risque de détérioration du système (1) de blocage en stationnement.

De préférence, et en référence à la figure 3, le flasque (9) comprend des rainures (12) radiales, régulièrement réparties autour de l'axe (5) de la roue (4) de blocage, lesquelles forment des pistes de guidage pour le déplacement des billes (10).

Comme indiqué, le dispositif de sécurité (2) centrifuge est monté coulissant à l'encontre d'un organe élastique de rappel (7) qui tend à repousser le dispositif de sécurité (2) dans sa position neutre. Plus précisément, le dispositif de sécurité (2) centrifuge est monté également coulissant autour de deux tiges (13) faisant saillie orthogonalement de la roue (4) de blocage, et diamétralement opposées par rapport à l'axe (5) de la roue de blocage, avec chaque tige (13) comprenant un ressort de compression (7) positionné autour d'elle, de sorte à repousser le dispositif de sécurité (2) en position neutre, lorsque la roue (4) de blocage n'est pas en rotation, ou bien lorsqu'elle est en rotation à une vitesse inférieure à la vitesse seuil.

Il ressort de ce qui précède que l'invention fournit bien à un système (1) de blocage en stationnement équipé d'un dispositif de sécurité (2) empêchant mécaniquement l'engagement du doigt (3a) dans le creux (4a) de la roue de de blocage lorsque le véhicule roule à une vitesse supérieure à une vitesse seuil.

## Revendications

1. Système (1) de blocage en stationnement pour une transmission d'une boîte de vitesses automatique, hybride, ou électrique d'un véhicule automobile, le système (1) comprenant un loquet (3) pourvu d'un doigt (3a) de blocage destiné à adopter une position d'engagement, poussé par un actionneur, dans laquelle le doigt (3a) est engagé dans un creux (4a) d'une roue (4) de blocage liée en rotation à une sortie de la transmission pour bloquer la sortie de la transmission, ou une position désengagement du doigt (3a), rappelé par un organe élastique de rappel (7), ***caractérisé* en ce qu'**il comprend un dispositif de sécurité (2) centrifuge solidaire en rotation avec la roue (4) de blocage, et déplaçable, par l'effet de la force centrifuge résultant d'une rotation de la roue (4) de blocage à une vitesse supérieure à une vitesse seuil, depuis une position neutre dans laquelle le dispositif de sécurité (2) centrifuge n'interfère pas avec le doigt (3a), jusqu'à une position de sécurité, à l'encontre d'un organe élastique de rappel (7), dans laquelle le dispositif de sécurité (2) centrifuge empêche l'engagement du doigt (3a) dans le creux (4a) de la roue (4).

2. Système (1) selon la revendication 1, ***caractérisé* en ce que** le dispositif de sécurité (2) centrifuge est monté autour d'un axe (5) de la roue (4) de blocage, et est déplaçable le long de cet axe (5), en éloignement de la roue (4) de blocage pour adopter la position neutre, ou en rapprochement de la roue (4) de blocage pour adopter la position de sécurité.

3. Système (1) selon l'une des revendications précédentes, ***caractérisé* en ce que**, dans la position de sécurité, le dispositif de sécurité (2) est positionné entre le doigt (3a) et la roue (4) de blocage.

4. Système (1) selon l'une des revendications précédentes, ***caractérisé* en ce que** le dispositif de sécurité (2) centrifuge comprend une couronne (8) comprenant un flasque (9) tronconique incliné vers l'intérieur de la couronne (8), et des billes (10) positionnées autour et à proximité de l'axe (5) de la roue (4) de blocage en appui contre le flasque (9) tronconique, à l'opposé de la couronne (8), et en contre-appui contre une paroi fixe (11) opposée au flasque (9), de sorte que lors de la rotation du dispositif de sécurité (2) les billes (10) sont déplacées et écartées de l'axe (5) sous l'effet de la force centrifuge de manière à provoquer le déplacement de la couronne (8) entre le doigt (3a) et la roue (4) de blocage.

5. Système (1) selon la revendication 4, ***caractérisé* en ce que** le flasque (9) comprend des rainures (12) radiales, régulièrement réparties autour de l'axe (5) de la roue (4) de blocage, et formant des pistes de guidage pour le déplacement des billes (10).

6. Système (1) selon la revendication 4, ***caractérisé* en ce que** la paroi fixe (11) est un pignon de vitesse (6) de la boîte de vitesses.

7. Système (1) selon l'une des revendications précédentes, ***caractérisé* en ce que** le dispositif de sécurité (2) centrifuge est monté coulissant autour de deux tiges (13) faisant saillie orthogonalement de la roue (4) de blocage, et diamétralement opposées par rapport à l'axe (5) de la roue (4) de blocage, chaque tige comprend un ressort de compression (7) positionné autour d'elle.
